# EUROPÄISCHE PATENTANMELDUNG

(11) **EP 2 503 283 A1**
(43) Veröffentlichungstag der Anmeldung: **26.09.2012**
(21) Anmeldenummer: 11159831.4
(22) Anmeldetag: 25.03.2011
(51) Int. Cl.: G01B 17/00, B66C 13/16, G01S 11/14, G01C 3/02, G01B 21/04

(54) **Verfahren und Vorrichtung zur Synchronisation von Ultraschallwandlern für die Bestimmung einer Ausfahrlänge eines ausfahrbaren Maschinenteils**

(71) Anmelder: MOBA - Mobile Automation AG, 65604 Elz (DE)
(72) Erfinder: Zils, Boris, 65558 Heistenbach (DE); Sehr, Willibald, 65604 Elz (DE)
(74) Vertreter: Zimmermann, Tankred Klaus

(57) **Zusammenfassung**

Ein Verfahren und eine Vorrichtung zur Synchronisation von Ultraschallwandlern, die für eine Bestimmung einer Ausfahrlänge eines ausfahrbaren Maschinenteils ein erstes Ultraschallsignal von einem ersten Ultraschallwandler (110) an einen zweiten Ultraschallwandler (120) senden, ein zweites Ultraschallsignal von einem zweiten Ultraschallwandler (120) an den ersten Ultraschallwandler (110) senden und basierend auf den empfangenen Ultraschallsignalen die Ausfahrlänge bestimmen, umfasst das Synchronisieren der Ultraschallwandler (110, 120) basierend auf einem zwischen diesen übertragenen Ultraschallsignal (P₁, P₂).

## Beschreibung

Ausführungsbeispiele der vorliegenden Erfindung beziehen sich auf ein Verfahren und auf eine Vorrichtung zur Synchronisation von Ultraschallwandlern, insbesondere auf Ultraschallwandler, die für eine Bestimmung einer Ausfahrlänge eines ausfahrbaren Maschinenteils vorgesehen sind und ein erstes Ultraschallsignal von einem ersten Ultraschallwandler an einen zweiten Ultraschallwandler sowie ein zweites Ultraschallsignal von dem zweiten Ultraschallwandler an den ersten Ultraschallwandler senden und basierend hierauf die Ausfahrlänge bestimmen.

An mobilen Maschinen, wie beispielsweise Hubarbeitsbühnen, Autokranen oder Betonpumpen, werden zur Abstützung häufig vier Arme oder Stempel ausgefahren. An deren äußeren Enden sind weitere Stempel senkrecht angeordnet, die nach unten gefahren werden können und somit eine Abstützung auf dem Boden ermöglichen, so dass das Fahrzeug eine stabile Lage einnimmt und beispielsweise nicht mehr auf den Rädern steht.

Je weiter die horizontalen Stempel ausgefahren werden, umso größer kann das seitliche Auslegen des Arbeitswerkzeugs oder der Hebebühne sein, ohne dass eine Gefahr des Umkippens oder von Instabilitäten besteht. Zur Erreichung der höchsten Auslenkung wäre es deshalb sinnvoll, die Stützen immer voll (maximal) auszufahren. Das ist jedoch aufgrund von beengten Platzverhältnissen innerhalb der Baustelle nicht immer möglich. Aus diesem Grund ist es wünschenswert, die Längen der vier Ausfahrstempel möglichst exakt zu messen, um damit - in Verbindung mit einer Lastmessung - eine optimale Standsicherheit bei gleichzeitiger optimaler Ausnutzung der seitlichen Auslegung zu gewährleisten. Um eine ausreichend hohe Arbeitssicherheit zu gewährleisten, ist es erforderlich, dass diese Längenmessung möglichst exakt geschieht.

Im Stand der Technik werden dabei vorwiegend Seilzugsensoren zum Messen der Ausfahrlänge eingesetzt. Diese Seillängengeber weisen üblicherweise ein Stahlseil auf, welches mit einer federvorgespannten Aufwickelvorrichtung und einem daran angebrachten Ein- oder Mehrgangpotentiometer gekoppelt ist. Neuere Seillängengeber können auch berührungslose Sensorelemente, wie z. B. Hallsensoren, verwenden. Ein Nachteil dieser konventionellen Seillängengeber besteht in den vielen beweglichen mechanischen Teilen, die ihrerseits relativ störanfällig sind. Außerdem sind sie nur begrenzt für einen rauen Mobilbetrieb einsetzbar. Andererseits weisen die vielen mechanischen Teile dieser konventionellen Seillängengeber einen erhöhten Verschleiß auf und zur Gewährleistung einer ausreichenden Sicherheit sind meist je zwei dieser Sensoren in einem Ausleger eingebaut.

Für einfache, absolute Längenmessung werden, abgesehen von dem konventionellen Seillängengeber, weitere verschiedene konventionelle Messverfahren genutzt. Eines der konventionellen Messverfahren nutzt beispielsweise optische Abstandssensoren, die Licht zum Messen des Abstands verwenden. Diese konventionellen Systeme sind jedoch dahingehend nachteilig, dass sie sehr störanfällig gegen Verschmutzung auf einer Baustelle sind. Aus diesem Grund werden in Baumaschinen oft Ultraschallsensoren eingesetzt. Bei Ultraschallsensoren sendet ein Ultraschallwandler eine Schallwelle mit einem bestimmten Öffnungswinkel aus und gleichzeitig wird ein Timer gestartet, der eine Zeitmessung durchführt. Die Wellen werden von einem Objekt reflektiert und auf dem Wandler, der dann als Empfänger dient, zurückgeworfen. Dort wird das Signal verstärkt und der Timer stoppt die vergangene Zeit zwischen dem Aussenden und dem Empfangen des reflektierten Signals. Aus der abgelaufenen Zeit zwischen dem Senden und Empfangen kann somit (dem einfachen Radarprinzip folgend) der Abstand des Objekts zu dem Wandler bestimmt werden, wobei berücksichtigt wird, dass die Entfernung zwischen dem Wandler und dem Objekt zweimal durchlaufen wird. Da allerdings die Schallausbreitung solcher Sensoren nicht eng fokussiert werden kann, ist ein Messen in engen Räumen, wie beispielsweise bei der gewünschten Anwendung (für Maschinenteile), nur schwer möglich. Zum Beispiel würden alle möglichen Reflexionen an Seitenwänden oder anderen Maschinenteilen zu einer Störung und Verfälschung des Messresultats führen.

Die EP 1 233 281 A beschreibt eine Vorrichtung und ein Verfahren zum Reduzieren von Effekten einer Fluidbewegung, z.B. Luft, beim Messen einer Entfernung unter Verwendung von akustischen Wellen. Der Einfluss longitudinaler Windeffekte wird dadurch unterbunden, dass die Entfernung zweimal gemessen wird, und zwar einmal in einer ersten Richtung und dann in einer der ersten Richtung entgegengesetzten zweiten Richtung. Ein Ultraschallsignal wird von einem ersten Sender in Richtung eines zweiten Senders ausgesendet und die entsprechende Zeit wird erfasst. Anschließend sendet der zweite Sender ein Ultraschallsignal aus, welches durch den ersten Sender erfasst wird und wiederum wird die Zeit für diese Übertragung erfasst. Basierend auf den erfassten Übertragungszeiten wird dann eine Entfernung zwischen den zwei Punkten, an denen die Sensoren bzw. Ultraschallwandler angeordnet sind, bestimmt.

Der gerade beschriebene, bekannte Ansatz ermöglicht somit die Bestimmung eines Abstands von zwei Punkten unter Verwendung von Ultraschallsignalen, die auch Umgebungseinflüsse berücksichtigen, und somit grundsätzlich für den Einsatz zur Bestimmung der Ausfahrlängen von Maschinenbauteilen, wie beispielsweise bei mobilen Kränen oder Ähnlichem, einsetzbar sind. Jedoch stellen solche Einsatzgebiete neben der sicheren Bestimmung der Ausfahrlänge weitere Ansprüche im Hinblick auf die Einhaltung von Sicherheitsnormen, insbesondere dahin gehend, dass der tatsächlich erfasste Abstand auch zuverlässig und richtig erfasst wird. Umgebungseinflüsse, wie oben erwähnt, können durch den Einsatz bekannter Techniken kompensiert werden, jedoch fordern die Sicherheitsnormen im Zusammenhang mit dem Einsatzgebiet der vorliegenden Erfindung weitergehende Maßnahmen, nämlich zum einen die gegenseitige Überprüfung der Zeitbasen der verwendeten Ultraschallwandler, und zum anderen die Berücksichtigung des Temperatureinflusses innerhalb der Messstrecke.

Zur Erfassung der Zeitbasen der verwendeten Ultraschallwandler können diese mit jeweils eigenen Synchronisationsleitungen verbunden werden. Beispielsweise kann eine erste Synchronisationsleitung vorgesehen sein, die ein Signal von dem ersten Ultraschallwandler an den zweiten Ultraschallwandler überträgt, und eine zweite Synchronisationsleitung kann vorgesehen sein, um ein Signal von dem zweiten Ultraschallwandler an den ersten Ultraschallwandler zu übertragen. Ebenso kann eine gemeinsame Synchronisationsleitung verwendet werden, über die die Synchronisationssignale zwischen den zwei Ultraschallwandlern ausgetauscht werden. Durch die Übertragung des Synchronisationssignals wird eine Synchronisation der Zeitbasen bzw. der Zeitgeber in den zwei Ultraschallwandlern ermöglicht, so dass diese basierend auf einer gleichen Zeitbasis arbeiten, was eine zuverlässige und sichere Erfassung des Abstandes gemäß vorgegebener Sicherheitsbedingungen ermöglicht. Nachteil dieses Ansatzes ist jedoch, dass zusätzliche Leitungen vorgesehen werden müssen, was es erfordert, dass die entsprechenden Sensor- bzw. Wandlerelemente mit entsprechenden Anschlüssen verbunden sind, und ferner müssen entsprechende Leitungen zwischen den zwei Wandlern vorgesehen werden, wobei diese dann so ausgestaltet sein müssen, dass diese auch beim Ausfahren, also einer Bewegung des ersten Ultraschallwandlers um eine vorbestimmte Entfernung, eine Verbindung bereitstellen.

Ferner könnten vorhandene Datenleitungen, z.B. ein CAN-Bus oder eine RS232-Schnittstelle verwendet werden, um Synchronisationssignale zwischen den Ultraschallwandlern auszutauschen. Dies erfordert jedoch eine Modifizierung des Übertragungsprotokolls und zusätzliche Signale, die auf den Datenleitungen bereitgestellt werden müssen, was insbesondere bei der Verwendung von seriellen Übertragungsleitungen, wie sie im Gebiet der vorliegenden Erfindung üblich sind, zu einer Verzögerung führt bzw. zu einem höheren Aufwand, um die Synchronisationssignale zu priorisieren.

Ausgehend von diesem Stand der Technik liegt der vorliegenden Erfindung die Aufgabe zugrunde, einen verbesserten Ansatz zu schaffen, der eine Synchronisation der Zeitbasen von zwei Ultraschallwandlern, die für die Bestimmung eines Abstands eines ausfahrbaren Maschinenteils eingesetzt werden, erreicht.

Diese Aufgabe wird durch ein Verfahren gemäß Anspruch 1 und durch eine Vorrichtung gemäß Anspruch 11 gelöst.

Ausführungsbeispiele der Erfindung schaffen ein Verfahren zur Synchronisation von Ultraschallwandlern, die für eine Bestimmung einer Ausfahrlänge eines ausfahrbaren Maschinenteils ein erstes Ultraschallsignal von einem ersten Ultraschallwandler an einen zweiten Ultraschallwandler senden, ein zweites Ultraschallsignal von dem zweiten Ultraschallwandler an den ersten Ultraschallwandler senden, und basierend auf den empfangenen Ultraschallsignalen die Ausfahrlänge bestimmen, mit folgendem Schritt:
Synchronisieren der Ultraschallwandler basierend auf einem zwischen diesen übertragenen Ultraschallsignal.

Ausführungsbeispiele der Erfindung schaffen eine Vorrichtung zur Bestimmung einer Ausfahrlänge eines ausfahrbaren Maschinenteils mit einem ersten Referenzpunkt und einem zweiten Referenzpunkt, die akustisch koppelbar sind und einen Abstand aufweisen, der sich in Abhängigkeit von einer Ausfahrlänge ändert, mit folgenden Merkmalen:
einem ersten und einem zweiten Ultraschallwandler, die an dem ersten und an dem zweiten Referenzpunkt anbringbar sind, wobei der erste Ultraschallwandler ausgebildet ist, um ein erstes Ultraschallsignal zu senden und ein zweites Ultraschallsignal zu empfangen, und wobei der zweite Ultraschallwandler ausgebildet ist, um das zweite Ultraschallsignal zu senden und das erste Ultraschallsignal zu empfangen,
wobei die Ultraschallwandler konfiguriert sind, um sich basierend auf einem zwischen diesen Wandlern übertragenen Ultraschallsignal zu synchronisieren.

Die vorliegende Erfindung schafft somit einen vorteilhaften Ansatz zur Synchronisation der Zeitbasen von zwei Ultraschallwandlern, ohne dass zusätzliche Leitungen vorgesehen sein müssen und ohne dass existierende Übertragungsleitungen oder Übertragungsprotokolle modifiziert werden müssen. Erfindungsgemäß wird eine Synchronisation unter Ausnutzung der ohnehin zwischen den Ultraschallwandlern übertragenen Signale durchgeführt, was den Vorteil hat, dass auf existierende Elemente der Ultraschallwandler zurückgegriffen werden kann, ohne dass weitere Verkabelungen oder Ähnliches erforderlich sind. Die Verarbeitung der Ultraschallsignale erfolgt innerhalb der Ultraschallwandler selbst, beispielsweise innerhalb der Steuereinheiten derselben, so dass hier lediglich die entsprechende Software bzw. Firmware oder die entsprechende Hardware angepasst werden muss, um basierend auf dem erfindungsgemäßen Ansatz eine Synchronisation bzw. eine Einstellung eines Zeitgebers der Ultraschallwandler zu bewirken.

Gemäß einem ersten Ausführungsbeispiel der Erfindung arbeitet die Anordnung zum Bestimmen der Ausfahrlänge derart, dass jeder der Ultraschallwandler während eines Messzyklus einen Ultraschallpuls ausgibt. Gemäß diesem Ausführungsbeispiel erfolgt eine Synchronisation des Zeitgebers eines Ultraschallwandlers derart, dass ein erster Ultraschallwandler anstelle des einen Sendepulses zwei Sendepulse ausgibt, die um eine vorbestimmte Zeitdauer voneinander beabstandet sind, so dass an dem empfangenden Ultraschallwandler bzw. an der Empfängerseite zwei Empfangsimpulse bzw. Empfangsultraschallpulse vorliegen, deren Abstand einer Referenzzeit des Senders entspricht. Ferner können die beiden Echos zur Plausibilität verwendet werden.

Gemäß einem weiteren Ausführungsbeispiel werden bei der Bestimmung der Ausfahrlänge wiederum einzelne Pulse durch die zwei Ultraschallwandler ausgetauscht, wobei zunächst ein Sendeimpuls ausgesendet wird, der Empfänger diesen empfängt und nach einer definierten Verzögerungszeit seinerseits einen Sendeimpuls zurücksendet. Das am Sender empfangene (zurückgesendete) Ultraschallsignal entspricht dann der doppelten Entfernung plus der bekannten Referenzzeit an dem Empfänger. In diesem Fall ist es erforderlich, dass die Synchronisation an einer Position erfolgt, an der der Abstand zwischen den Ultraschallwandlern bekannt ist.

Gemäß einem weiteren Ausführungsbeispiel der Erfindung wird zusätzlich zur Synchronisation der Zeitbasen bzw. Zeitgeber der Ultraschallwandler auch ein Temperatureinfluss berücksichtigt, was zur Erfüllung bestimmter, vorgegebener Sicherheitsnormen ebenfalls gefordert ist. Nachdem der Temperatureinfluss innerhalb der Messstrecke jedoch nur schwer erfassbar ist, ist gemäß diesem Ausführungsbeispiel in jedem der Ultraschallwandler ein Temperatursensor vorgesehen, der beispielsweise mit demselben integriert ist. Aus einem Temperaturgefälle zwischen den beiden Ultraschallwandlern kann zwischen Fehlern, die aufgrund einer Temperaturänderung bzw. Fehlern, die auf einen Einfluss externer Parameter, wie beispielsweise des Windes, zurückgehen, unterschieden werden. Entsprechend der Unterscheidung kann dann eine entweder temperaturspezifische oder windeinflussspezifische Kompensation eines Signals, welches die Ausfahrlänge angibt, durchgeführt werden.

Gemäß Ausführungen der Erfindung wird eine Vorrichtung zur Bestimmung der Ausfahrlänge von einem ausfahrbaren Maschinenteil geschaffen, bei der an zwei Referenzpunkten, deren Abstand sich in Abhängigkeit der Ausfahrlänge ändert, jeweils ein Ultraschallwandler angeordnet ist, so dass ein Ultraschallsignal, das von dem einen der zwei synchronisierten Ultraschallwandler ausgesandt wird, durch den anderen der zwei Ultraschallwandler an dem anderen Referenzpunkt empfangen wird und aus einer Zeitmessung, die das Schallsignal zur Ausbreitung von dem ersten zum zweiten Referenzpunkt benötigt, der Abstand ermittelt werden kann. Gleichzeitig wird, um eine ausreichende Sicherheit zu gewährleisten, eine zweite Messung durchgeführt. Bei der zweiten Messung wird von dem Ultraschallwandler an dem zweiten Referenzpunkt ein weiteres Ultraschallsignal ausgesendet, welches von dem Ultraschallwandler am ersten Referenzpunkt empfangen wird, so dass aus der verstrichenen Zeit zwischen dem Senden und Empfangen des weiteren Ultraschallsignals ein zweites Messergebnis für die Ausfahrlänge bestimmt werden kann.

Durch ein Vergleichen der beiden Messergebnisse, d. h. der Zeitdauer, die das Ultraschallsignal von dem ersten zu dem zweiten Referenzpunkt benötigte, und der Zeitdauer, die das weitere Ultraschallsignal von dem Aussenden vom zweiten Referenzpunkt zu dem ersten Referenzpunkt benötigt, kann die Zuverlässigkeit der Messung abgeschätzt werden. Wenn beispielsweise beide Messergebnisse sich kaum oder nicht voneinander unterscheiden, kann davon ausgegangen werden, dass die ermittelte Ausfahrlänge richtig bestimmt wurde. Wenn sich jedoch beide Messergebnisse um mehr als einen Schwellenwert (z. B. um mehr als 5%, mehr als 10% oder mehr als 30 %) voneinander unterscheiden, ist höchstwahrscheinlich zumindest eine der Messungen nicht korrekt ausgeführt worden. Dementsprechend kann entweder der Mittelwert beider Messungen als die Ausfahrlänge genommen werden - besser wäre es aber die Messungen noch mal zu wiederholen. Alternativ kann, um eine möglichst hohe Sicherheit zu gewährleisten, die jeweils kleinste ermittelte Ausfahrlänge als Resultat genommen werden. Die Messung der Ausfahrlänge kann in jedem Fall als sicher bewertet werden, wenn eine der Messungen redundant ist und lediglich der Bestätigung des zuvor ermittelten Resultats dient.

Ausführungsbeispiele verwenden daher zwei Ultraschallschwinger (oder Ultraschallwandler), die beide Signale senden und empfangen können. Der erste Schwinger sendet ein Signal aus, während der zweite Schwinger das Signal empfängt und daraus die Entfernung berechnet. Danach wird eine zweite Messung gestartet, wobei der erste Schwinger nun als Empfänger dient, während der zweite Schwinger als Sender betrieben wird. Optional kann das Empfangen des Signals von dem zweiten Schwinger als Triggersignal für das Initiieren der zweiten Messung dienen. Daraus entstehen dann wie gesagt zwei Messungen, die auf Plausibilität geprüft werden können bzw. getrennt ausgegeben werden können.

Beide Geräte haben optional eine eigene Signalauswertung, die jedoch vorteilhafterweise miteinander synchronisiert sind. Die Abstandswerte können beispielsweise über einen gemeinsamen CAN-Bus (CAN = Controller Area Network) mit getrennten Identifier (Id, Identifizierern) oder über getrennte Busverbindungen übertragen werden.

Ein technisches Problem bei der Messung mit Ultraschall ist der Einfluss der Temperatur auf das Messergebnis. So kann sich näherungsweise ein Fehler ergeben, der beispielsweise das Ergebnis um ca. 0,18%/°C verfälschen kann. Diese Verfälschung wird von der Temperaturabhängigkeit der Schallgeschwindigkeit verursacht. Um diesen Fehler weitestgehend zu kompensieren, nutzen Ausführungsbeispiele die folgenden zwei Möglichkeiten:
(1) In jedem der Sensoren werden Temperaturfühler eingebaut, womit die Temperaturen an den Sensorköpfen gemessen werden können. Die Schwankungen der Temperatur entlang der Messstrecke bleiben dabei allerdings unberücksichtigt. Außerdem haben die Temperatursensoren eine relativ hohe Zeitkonstante, die gerade bei Anwendungen im Außenbereich (mit schnell sich ändernden Temperaturen) eine Kompensation erschwert.
(2) Es werden direkte Referenzlaufzeitmessungen zur Kompensation durchgeführt. Beispielsweise wird ein kleiner Reflektor in der Nähe der jeweiligen Sensoren angebracht. Damit können die Sensoren, nachdem sie ein Ultraschallsignal zum gegenüberliegenden Schwinger gesendet haben, ein von dem Reflektor zurück geworfenes Signal selbst empfangen und auswerten. Da die Strecke zu dem Reflektor konstant ist (bis eben auf die besagten Temperaturschwankung), kann die Laufzeit des Signals zur Kompensation des eigentlichen Abstandswerts verwendet werden. Dies bedeutet, dass eine Änderung der Laufzeitmessung zu dem Reflektor direkt in Verbindung steht mit einer thermisch bedingten Änderung der Schallgeschwindigkeit entlang der Referenzstrecke. Diese Methode verspricht ein besseres Ergebnis als bei der Möglichkeit (1) oben, kann jedoch nur bei genügendem Platzbedarf hinsichtlich der Referenzstrecken eingesetzt werden.

Ausführungsbeispiele schaffen somit einen Abstandssensor, der sowohl robust ist, als auch die Messaufgabe im Hinblick auf die Sicherheit zufrieden stellend löst.

Optional können zwei Auswerteeinheiten (für jeden Ultraschallwandler eine Auswerteeinheit) vorgesehen werden oder aber auch nur eine Auswerteeinheit, wobei die eine Auswerteeinheit mit beiden Ultraschallwandlern gekoppelt ist. Die Kopplung kann beispielsweise durch eine Drahtverbindung hergestellt werden. Alternativ kann das Ultraschallsignal auch genutzt werden, um beispielsweise Daten zu übermitteln. So kann beispielsweise das Aussenden eines Ultraschallsignals zur Synchronisation genutzt werden, so dass die entsprechenden Zeitnehmer oder Timer im gleichen Zeittakt laufen. Optional kann auch der Zeitpunkt, des Aussendens mittels des Ultraschallsignals übertragen werden, so dass der gegenüberliegende Ultraschallwandler in der Lage ist, den Aussendezeitpunkt des Ultraschallsignals zu erfassen und daraus die Laufzeit zu bestimmen.

Optional ist es ferner möglich, dass zunächst ein Ultraschallsignal von einem Ultraschallwandler ausgesandt wird, welches von dem anderen Ultraschallwandler empfangen wird und der gegenüberliegende Ultraschallwandler das zweite Ultraschallsignal nach einer vorbestimmten Zeitdauer (z. B. 0,2 Sekunden oder 0,3 Sekunden oder eine Sekunde) aussendet. Das zweite Ultraschallsignal wird wiederum von dem ersten Ultraschallwandler empfangen, der seinerseits dann aus der verstrichenen Zeit zwischen dem Aussenden des ersten Ultraschallsignals und dem Empfang des zweiten Ultraschallsignals und der Nutzung der Verzögerungszeit (=vorbestimmte Zeitdauer), die der zweite Ultraschallwandler wartet, die Laufzeit des Signals misst.

Eine weitere Option besteht darin, dass während des Ausfahrens der Maschinenteile (z. B. der Stützen) parallele Messungen fortlaufend durchgeführt werden (z. B. im Sekundentakt), so dass beide Ultraschallwandler unabhängig voneinander Ultraschallsignale senden können. In einem solchen Szenario ist allerdings eine Synchronisation der beiden Ultraschallwandler sinnvoll, so dass beide Ultraschallwandler im gleichen Takt Ultraschallsignale senden.

Vorteile von Ausführungsbeispielen der vorliegenden Erfindung umfassen somit zum einen die hohe Robustheit, da Ultraschallsignale verwendet werden, die weitestgehend robust hinsichtlich von Verschmutzungen und Feuchtigkeit oder schlechten Witterungsbedingungen auf Baustellen sind. Zum anderen wird die Sicherheit der Messung dadurch erhöht, dass zwei Ultraschallwandler genutzt werden, die parallele Messungen durchführen, die wiederum hinsichtlich der Redundanz untersucht werden können. Nur wenn eine der Messungen redundant ist, d. h. das gleiche Resultat liefern oder beide Messungen innerhalb einer Fehlertoleranz sind, kann der Messung vertraut werden.

Im Gegensatz zu den Längenmessungen aus dem Stand der Technik, wo die Laufzeit eines Signals nach einer Reflexion am Referenzpunkt gemessen wird, können Reflexionen bei Ausführungsbeispielen ignoriert werden. Reflexionen sind nämlich potentiell fehlerbehaftet, da nicht genau sichergestellt werden kann, woran die Signale reflektiert wurden (an einer Baumaschine gibt es viele potentielle Reflexionspunkte). Bei Ausführungsbeispiele kann beispielweise immer die zuerst eintreffende Hauptwellenfront detektiert werden und nachfolgende Reflexionen können ignoriert werden. Damit ist gegenüber herkömmlichen Verfahren eine deutliche Erhöhung der Genauigkeit erreichbar.

Weitere Vorteile von Ausführungsbeispielen sind, dass das Ultraschallsignal gleichzeitig zur Signalübermittlung genutzt werden kann, wobei die Signalübermittlung zum einen der Synchronisation der beiden Ultraschallwandler dient und zum anderen für die Übermittlung von Messresultaten genutzt werden kann.

Bevorzugte Ausführungsbeispiele der vorliegenden Erfindung werden nachfolgend Bezug nehmend auf die beiliegenden Zeichnungen näher erläutert. Es zeigen:
- Fig. 1: eine schematische Darstellung eines Ausführungsbeispiels der vorliegenden Erfindung;
- Fig. 1(a): eine schematische Darstellung eines Ansatzes zur Synchronisation von zwei Ultraschallwandlern gemäß einem ersten Ausführungsbeispiel der Erfindung; und
- Fig. 1(b): eine schematische Darstellung zur Synchronisation von zwei Ultraschallwand-lern gemäß einem zweiten Ausführungsbeispiel der Erfindung; und
- Fig. 2: eine Darstellung eines Krans als ein mögliches Anwendungsgebiet;
- Fig. 3: eine Darstellung einer ausfahrbaren Stütze mit zwei möglichen Referenzpunk-ten für Ultraschallwandler;
- Fig. 4: eine schematische Darstellung von zwei Ultraschallwandlern mit Thermosen-soren;
- Fig. 5: eine schematische Darstellung von zwei Ultraschallwandlern mit zusätzlich angebrachten Reflektoren zur Referenzmessung;
- Fig. 6: eine Darstellung einer ausfahrbaren Stütze mit zwei alternativen Referenzpunk-ten.

Bevor im Folgenden die vorliegende Erfindung anhand der Zeichnungen näher erläutert wird, wird darauf hingewiesen, dass gleiche Elemente in den Figuren mit den gleichen oder ähnlichen Bezugszeichen versehen sind, und dass eine wiederholte Beschreibung dieser Elemente weg gelassen wird.

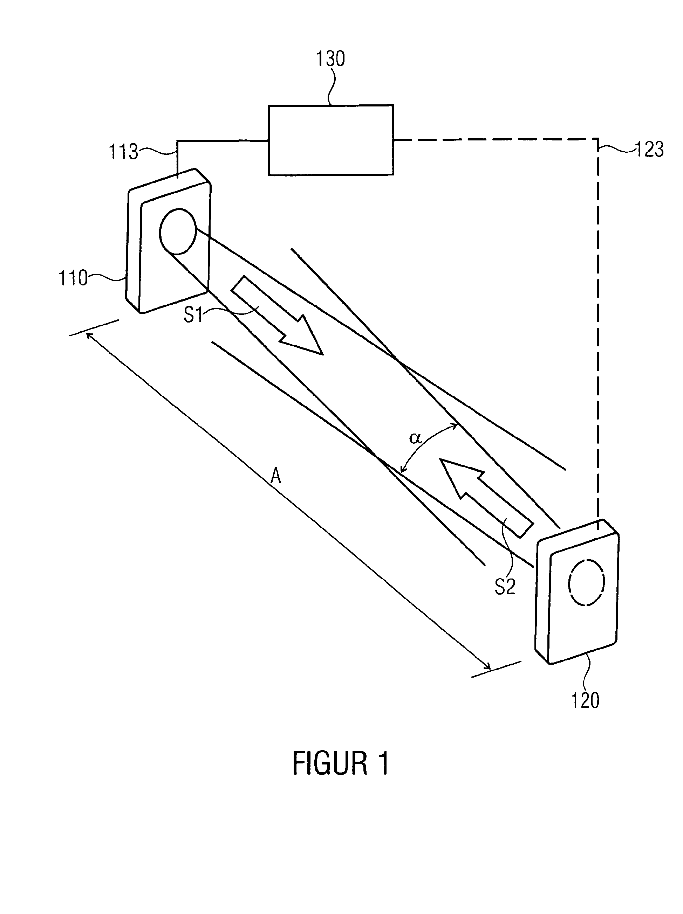

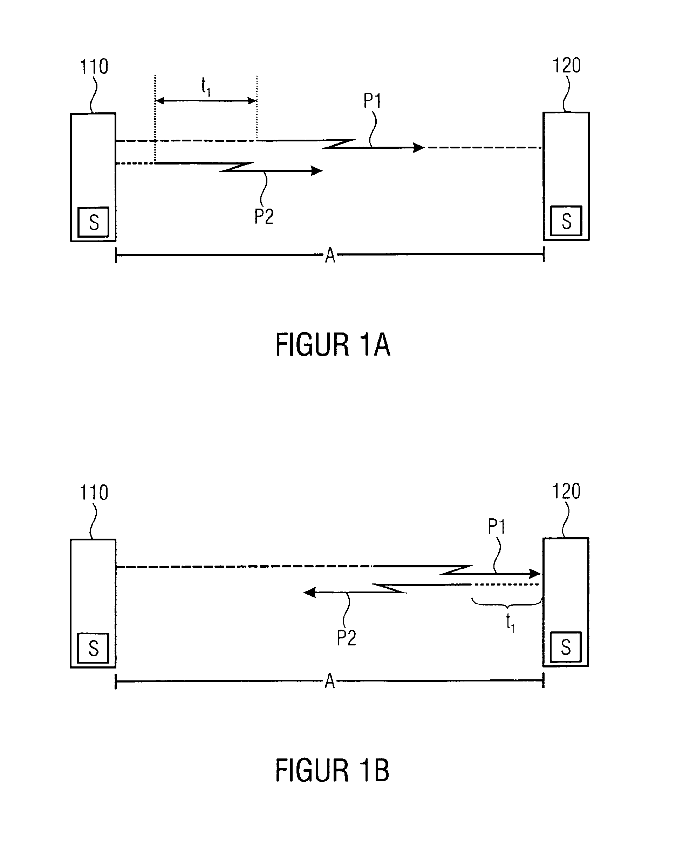

Ausführungsbeispiele der Erfindung betreffen die Bestimmung einer Ausfahrlänge von Stützen eines Fahrzeugs, wobei das Fahrzeug einen Ausleger oder Kranmechanismus umfassen kann, dessen maximal zulässige Auslenkung u.a. abhängig von der Ausfahrlänge der Stützen bestimmt wird. Ferner kann eine Masse einer an dem Ausleger befestigten Last und/oder eine Ausfahrlänge des Auslegers berücksichtigt werden. Für die Bestimmung der Ausfahrlänge einer Stütze ist ein kontaktloses Verfahren vorgesehen, welches die Entfernung zwischen zwei Punkten mittels Ultraschall bewirkt. Hierfür sind zwei Ultraschallwandler vorgesehen, die einer Stütze zugeordnet sind. Ein Wandler ist z.B. an einem Chassis des Fahrzeugs befestigt und der andere Wandler ist an der Stütze befestigt, so dass er sich beim Ausfahren der Stütze mit derselben bewegt. Fig. 1 zeigt eine schematische Darstellung für ein erstes Ausführungsbeispiel der vorliegenden Erfindung, bei dem ein erster Ultraschallwandler 110 und ein zweiter Ultraschallwandler 120 sich in einem Abstand A voneinander befinden. Der erste Ultraschallwandler 110 sendet beispielsweise zu einem Zeitpunkt t₁ ein erstes Ultraschallsignal S 1 in Richtung des zweiten Ultraschallwandlers 120 aus. Der zweite Ultraschallwandler 120 empfängt beispielsweise das erste Ultraschallsignal S1 zu einem Zeitpunkt t₁ + T1. Der zweite Ultraschallwandler 120 sendet daraufhin ein zweites Ultraschallsignal S2 in Richtung des ersten Ultraschallwandlers 110, wobei beispielsweise das zweite Ultraschallsignal S2 zu einem Zeitpunkt t₂ gesendet wird und von dem ersten Ultraschallwandler 110 zu einem Zeitpunkt t₂ + T2 empfangen wird. Beispielsweise kann t₂ so gewählt werden, dass nach Empfang des ersten Ultraschallsignals 110 eine feste Wartezeit (t₁ +T1 - t₂) verstreicht, bevor das zweite Ultraschallsignal 120 ausgesendet wird. Somit wirkt der zweite Ultraschallwandler 120 als effektiv als ein zeitlich verzögerter Transponder.

Die Zeitpunkte können beispielsweise derart gewählt werden, dass der Zeitpunkt t₂ größer ist als der Zeitpunkt t₁ (oder größer ist als t₁+T1), so dass eventuelle Reflexionen des ersten Ultraschallsignals S1 an Maschinenteilen oder anderen Reflexionsobjekten nicht mit dem zweiten Ultraschallsignal S2 interferieren können. Beispielsweise kann der erste Ultraschallwandler 110 ausgebildet sein, um das zweite Ultraschallsignal S2 erst in einem zeitlichen Mindestabstand von dem Aussenden des ersten Ultraschallsignals S 1 zu empfangen, wobei der zeitliche Mindestabstand so gewählt sein kann, dass danach Reflexionen abgeklungen sind.

Optional kann ferner das erste Ultraschallsignal S 1 eine andere Frequenz aufweisen als das zweite Ultraschallsignal S2. Damit könnten dann parallele Messungen durchgeführt werden, ohne dass die Gefahr von Interferenzen oder von Verwechselungen mit reflektierten Signalen bestehen würde.

Weiterhin weist das Ausführungsbeispiel, wie in Fig. 1 gezeigt ist, eine Auswerteeinheit 130 auf, die beispielsweise mit dem ersten Ultraschallwandler 110 über eine elektrische Verbindung 113 verbunden und ausgebildet ist, um aus dem Zeitintervall (T1+T2+t₂-t₁) zwischen dem Senden des ersten Ultraschallsignals S 1 und dem Empfangens des zweiten Ultraschallsignals S2 durch den ersten Ultraschallwandler 110 den Abstand A zu bestimmen. Zusätzlich kann aus der Zeitdauer T2, die das zweite Ultraschallsignal S2 benötigt, um vom zweiten Ultraschallwandler 120 zu dem ersten Ultraschallwandler 110 zu gelangen, der Abstand A bestimmt werden. Die entsprechenden Zeiten oder Zeitpunkte (z. B. t₁ und t₂) oder andere Informationen können dabei durch die Ultraschallsignale übermittelt werden.

Optional ist die Auswerteeinheit 130 mittels einer weiteren elektrischen Verbindung 123 ebenfalls mit dem zweiten Ultraschallwandler 120 verbunden (z. B. mit einem CAN-Bus), so dass die Auswerteeinheit 130 ebenfalls aus einer Laufzeitmessung des ersten Ultraschallsignals S 1 von dem ersten Ultraschallwandler 110 zu dem zweiten Ultraschallwandler 120 den Abstand A noch einmal zu bestimmen. Optional ist es ebenfalls möglich, dass sowohl der erste Ultraschallwandler 110 und der zweite Ultraschallwandler 120 jeweils eine Auswerteeinheit aufweisen, die aus den Laufzeitmessungen (für T 1 und T2) den Abstand A bestimmen (in zwei unabhängigen Berechnungen).

Sofern beide Messungen nur innerhalb einer Toleranzschwelle von beispielsweise ±1 % oder ±5 % oder ±10 % voneinander abweichen, kann die Auswerteeinheit 130 den gemessenen Abstand A als zuverlässig klassifizieren. Bei größeren Abweichungen kann die Auswerteeinheit 130 entweder beide gemessenen Abstände A ausgeben und/oder die Messung als unsicher klassifizieren, woraufhin beispielsweise eine erneute Messung durchgeführt wird.

Der erste und zweite Ultraschallwandler 110 und 120 sind elektrische Bauelemente, die Ultraschallsignal erzeugen und beispielsweise gerichtet mit einem Öffnungswinkel α ausstrahlen. Der Öffnungswinkel α des ersten und zweiten Ultraschallsignals S1, S2 sind beispielsweise möglichst klein gewählt, so dass eine Streuung und Reflexion an benachbarten Maschinenteilen oder am Erdboden möglichst vermieden wird. Ferner sind der erste Ultraschallwandler 110 und der zweite Ultraschallwandler 120 beispielsweise ausgebildet, um jeweils das eigene Signal als auch das Signal des gegenüberliegenden Ultraschallwandlers zu erfassen.

Die oben beschriebene Anordnung zum Bestimmen der Ausfahrlänge arbeitet zuverlässig, jedoch fordern vorgegebene Sicherheitsnormen weitere Schritte, um eine zuverlässige und richtige Feststellung der Ausfahrlänge zu gewährleisten, insbesondere um sicherzustellen, dass die bestimmte Ausfahrlänge auch der tatsächlichen Ausfahrlänge entspricht, und ein die Ausfahrlänge anzeigendes Signal nicht durch systeminterne Schwankungen bzw. Unsicherheiten oder durch systemexterne Einflüsse verzerrt bzw. fehlerhaft ist.

Ein wichtiger Aspekt für die korrekte und fehlerfreie Erfassung der Ausfahrlänge, die ja basierend auf dem zeitlichen Abstand der Messung des Empfangs des Ultraschallsignals zurückgeht, ist daher in einer korrekten Synchronisation der zwei Ultraschallwandler zu sehen, genauer gesagt in einer korrekten Synchronisation der Zeitbasen dieser Ultraschallwandler, um sicherzustellen, dass die an den zwei Wandlern erfassten Zeiten auch miteinander synchronisiert sind. Aus diesem Grund wird gemäß einem Ausführungsbeispiel der Erfindung eine zusätzliche Synchronisation vorgesehen, wobei diese unter Vermeidung zusätzlicher Leitungen oder zusätzlicher Übertragungsprotokolle lediglich auf den zwischen den Ultraschallwandlern übertragenen Signalen basiert.

Wie oben erwähnt, wird gemäß Ausführungsbeispielen die Ausfahrlänge der Stützen überwacht, um eine zulässige Ausschwenkung eines Kranmechanismus oder eines Auslegers zu bestimmen. Der Ablauf der Stützenbetätigung eines solchen Fahrzeugs ist z.B. so, dass ein Bediener das Fahrzeug auf die Baustelle fährt und dann die Stützen hydraulisch nach außen bewegt, um die Abstützung zu gewährleisten. Abhängig von den Platzverhältnissen werden die Stützen möglichst weit nach außen gefahren, wodurch eine große Ausschwenkung des Werkzeuges oder Korbes über den Ausleger ermöglicht wird. Hieraus ergeben sich bei der Bestimmung der Ausfahrlängen zwei Phasen:
1) Stütze in Bewegung
2) Stütze im Stillstand.

Gemäß einem Ausführungsbeispiel wird bevorzugt, die Ausfahrlänge zu bestimmen, wenn die Stützen im Stillstand sind. Wenn die Stützen nicht bewegt werden, wird die Länge als Maß für die Berechnung der Auslegerlängen herangezogen, so dass es in diesem Fall erforderlich ist ,zu erkennen, ob die Stütze bewegt wird oder nicht. Das kann z.B. durch drei verschiedene Verfahren geschehen.
1) Erkennung über das Ultraschallsystem Wie oben beschrieben wurde, erfolgen die beiden Messungen zeitlich hintereinander. Somit ergibt sich, dass beim Ausfahren der Stütze die zweite Messung etwas länger ist als die erste Messung. Umgekehrt ist die erste Messung etwas länger als die zweite, wenn die Stütze eingefahren wird. Auch wenn die beiden Werte schwanken, kann über eine statistische Auswertung über längere Zeit eindeutig erkannt werden, ob die Stütze sich bewegt oder nicht.
2) Erkennung der Bewegung über die Auswertung der Ansteuersignales des Hydraulikzylinders
3) Auswertung des Signales über den Bodendruck Nachdem die Stützen ausgefahren sind, werden die Abstützfüße hydraulisch nach unten gefahren, um das Fahrzeug gegenüber dem Boden abzustützen. In den Füßen sind Druckmeßsysteme eingebaut, um den Bodendruck und damit die Festigkeit des Bodens zu überwachen. Sobald ein Mindestbodendruck vorhanden ist, wird erst die Abstützung freigegeben. Erst dann werden auch die Ausfahrlängen der Stützen für die Berechnung benötigt.

Nachdem die Bestimmung der Ausfahrlänge bei stillstehender Stütze erfolgen soll, ergibt sich, dass Fehler der einzelnen Messungen im wesentlichen nur aufgrund von Temperaturschwankungen oder Windbewegungen entstehen können. Daher ist gemäß einem weiteren Ausführungsbeispiel ferner vorgesehen, Temperatureinflüsse zu kompensieren, wobei in einem solchen Fall festgestellt wurde, dass der Temperatureinfluss innerhalb der Messstrecke, also innerhalb der Strecke zwischen den zwei Ultraschallwandlern, nur schwer erfassbar ist, und daher gemäß diesem Ausführungsbeispiel jedem einzelnen Sensor oder Wandler ein Temperatursensor zugeordnet ist, der beispielsweise gemeinsam mit dem Ultraschallwandler integriert aufgebaut ist. Aus dem möglichen Temperaturgefälle zwischen den beiden Ultraschallwandlern kann dann zwischen Temperaturfehlern und Fehlern aufgrund des Windeinflusses unterschieden werden, und eine entsprechende Kompensation durchgeführt werden, also entweder eine Kompensation der Temperaturfehler bzw. eine Kompensation der Einflüsse des Windes.

Gemäß einem Ausführungsbeispiel kann die Temperaturmessung über Fühler erfolgen. In diesem Fall sind an den einzelnen Ultraschallsensoren über 10 bis 20cm lange Kabel Temperaturfühler angeschlossen. Die Temperaturen dieser Fühler werden von der eingebauten Elektronik ausgewertet. Der Nachteil dieser Sensoren besteht darin, dass sie eine relativ hohe Zeitkonstante haben und außerdem nicht an der für die Ultraschallmessung optimalen Stelle die Temperatur messen können. Es kann jedoch eine Plausibilitätsprüfung in der Weise geschehen, dass der für die Sicherheitsbetrachtung ungünstigste Fall herangezogen wird.

Nachfolgend werden verschiedene Ausführungsbeispiele für eine Synchronisation der zwei Ultraschallwandler 110 und 120 näher erläutert. Gemäß Ausführungsbeispielen erfolgt die Synchronisation der Ultraschallwandler bei stillstehenden Stützen. Fig. 1(a) zeigt eine erste, schematische Darstellung, anhand der ein erstes Ausführungsbeispiel näher erläutert wird. Gemäß diesem Ausführungsbeispiel erfolgt eine Synchronisation eines Zeitgebers, der beispielsweise in einer Steuereinheit S des zweiten Ultraschallwandlers 120 angeordnet ist, basierend auf Signalen, die von dem ersten Ultraschallwandler 110 übertragen werden. Die Ultraschallwandler übertragen für die Bestimmung der Ausfahrlänge A jeweils einen Ultraschallimpuls während eines Messzyklus, wobei mehrere Messzyklen aufeinanderfolgend durchgeführt werden können. Zu vorbestimmten Zeitpunkten wird eine Synchronisation der Ultraschallwandler 110 und 120 durchgeführt, wobei in einem solchen Fall beispielsweise der erste Ultraschallwandler 110 durch seine Steuereinheit S angesteuert wird, während eines Zyklus zwei aufeinanderfolgende Ultraschallpulse P₁ und P₂ auszugeben, die unter Steuerung der Steuereinheit S des Ultraschallwandlers 110 um eine vorbestimmte Verzögerungszeit t₁ verzögert sind, wie es in Fig. 1(a) gezeigt ist. Der Ultraschallwandler 120, der die Pulse P₁ und P₂ empfängt, befindet sich ebenfalls im Synchronisationsmodus und empfängt die zwei Pulse P₁ und P₂ und berechnet mittels seiner Steuereinheit die Zeitdifferenz t₁ und damit die Referenzzeit, die der erste Ultraschallwandler 110 verwendet. Basierend auf dieser erfassten Referenzzeit kann der Ultraschallwandler 120 seinen internen Zeitgeber oder Taktgeber auf die Referenzzeit des Ultraschallwandlers 110 synchronisieren. Nach Einstellung des Zeitgebers des Wandlers 120 ist die Synchronisation abgeschlossen. An dieser Stelle sei darauf hingewiesen, dass die Synchronisation auch in anderer Richtung erfolgen kann, nämlich durch die Aussendung der zwei Pulse P₁ und P₂ mit der Verzögerung t₁ von dem Ultraschallwandler 120 an den Ultraschallwandler 110, der dann basierend auf der erfassten Verzögerungszeit t₁ seinen Zeit- bzw. Taktgeber einstellt, so dass die erforderliche Synchronisation zwischen den Wandlern 110 und 120 erreicht ist.

Ein Vorteil des anhand der Fig. 1(a) beschriebenen Ausführungsbeispiels besteht darin, dass die beiden Echos zur Plausibilität verwendet werden können.

Anhand der Fig. 1(b) wird nachfolgend ein weiteres Ausführungsbeispiel zur Synchronisation erläutert, wobei Fig. 1(b) eine ähnliche, schematische Darstellung wie in Fig. 1(a) zeigt. Auch bei diesem Ausführungsbeispiel ist vorgesehen, dass die Ultraschallwandler während der Messzyklen jeweils einen Ultraschallpuls senden und empfangen. Wird nun eine Synchronisation des ersten Ultraschallwandlers 110 auf die Zeitbasis des zweiten Ultraschallwandlers 120 erwünscht, so erfolgt eine entsprechende Ansteuerung der Ultraschallwandler 110, 120, woraufhin der erste Ultraschallwandler 110 einen ersten Ultraschallpuls P₁ ausgibt, der am Ultraschallwandler 120 empfangen wird. Der Ultraschallwandler 120 erzeugt nach Ablauf einer vorbestimmten Verzögerungszeit t₁ einen zweiten Puls P₂, der an den ersten Ultraschallwandler 110 zurückgesendet wird, so dass das zurückgesendete, am Ultraschallwandler 110 empfangene Ultraschallsignal P₂ der doppelten Entfernung A plus einer bekannten Referenzzeit t₁ entspricht. Die Referenzzeit t₁ wurde durch den Ultraschallwandler 120 bestimmt und ermöglicht es dem Ultraschallwandler 110, der bei bekanntem Abstand A zwischen den Wandlern 110 und 120 das Signal P₂ empfängt, diese Verzögerungszeit t₁ zu erkennen und seinen internen Zeitgeber bzw. Taktgeber basierend auf diesem Zeitsignal einzustellen und damit auch den Wandler zu synchronisieren. Auch hier besteht die Möglichkeit, den Wandler 120 auf den Wandler 110 zu synchronisieren, wobei in diesem Fall der Wandler 120 das Signal P₁ ausgibt, der Wandler 110 eine Verzögerung einstellt und nach der Verzögerung das Signal P₂ an den Wandler 120 zurücksendet, der dann die Verzögerungszeit erkennt und seinen Taktgeber einstellt. Im Zusammenhang mit der Fig. 1(b) sei darauf hingewiesen, dass hier eine Kenntnis des Abstandes A erforderlich ist, so dass dieses Synchronisationsverfahren durchgeführt wird, wenn sich die Sensoren bzw. Ultraschallwandler in einer vorbestimmten, bekannten Positionsbeziehung zueinander befinden.

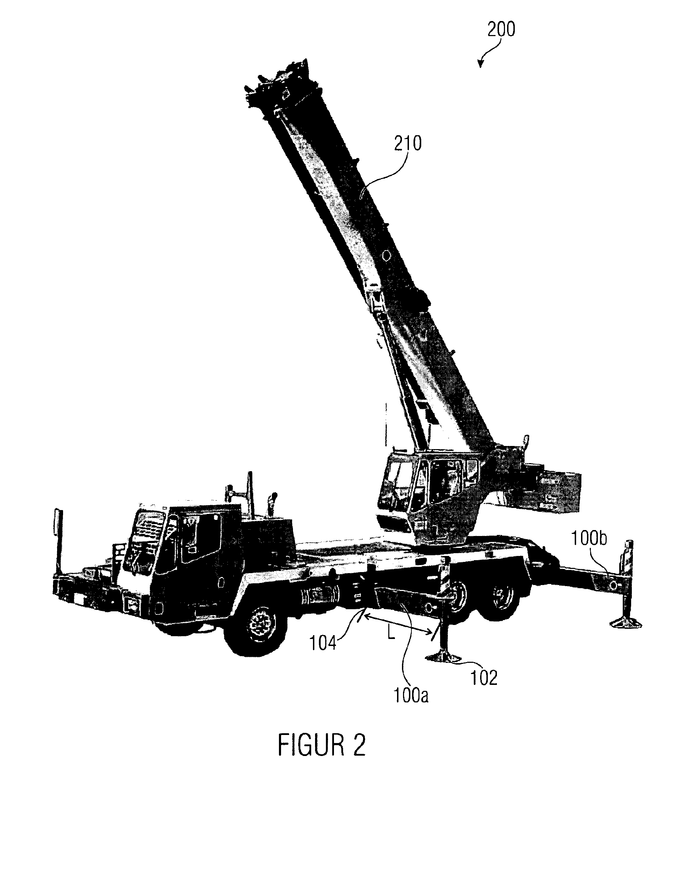

Die Fig. 2 zeigt eine mögliche Anwendung der Vorrichtung zur Bestimmung einer Ausfahrlänge für einen mobilen Kran 200. Der mobile Kran 200, wie er in der Fig. 2 gezeigt ist, weist zwei ausfahrbare Maschinenteile 100a und 100b (Stützen) auf, wobei Ausführungsbeispiele genutzt werden, um die Ausfahrlänge L beispielsweise des ersten ausfahrbaren Maschinenteils 100a zu bestimmen. Die Ausfahrlänge L kann beispielsweise zwischen dem Mittelpunkt des Stempels 102 und der Fixierung 104 des ausfahrbaren Maschinenteils 100a an dem mobilen Kran 200 gemessen werden.

Ferner weist der mobile Kran 200 einen Ausleger 210, um Lasten zu heben. Die Ausfahrlänge L der Stützen 100 bestimmen nun wie weit der Ausleger 210 seitlich ausgefahren werden kann oder mit wie viel Last der Ausleger 210 belastet werden kann, ohne dass die Gefahr einer Instabilität auftritt.

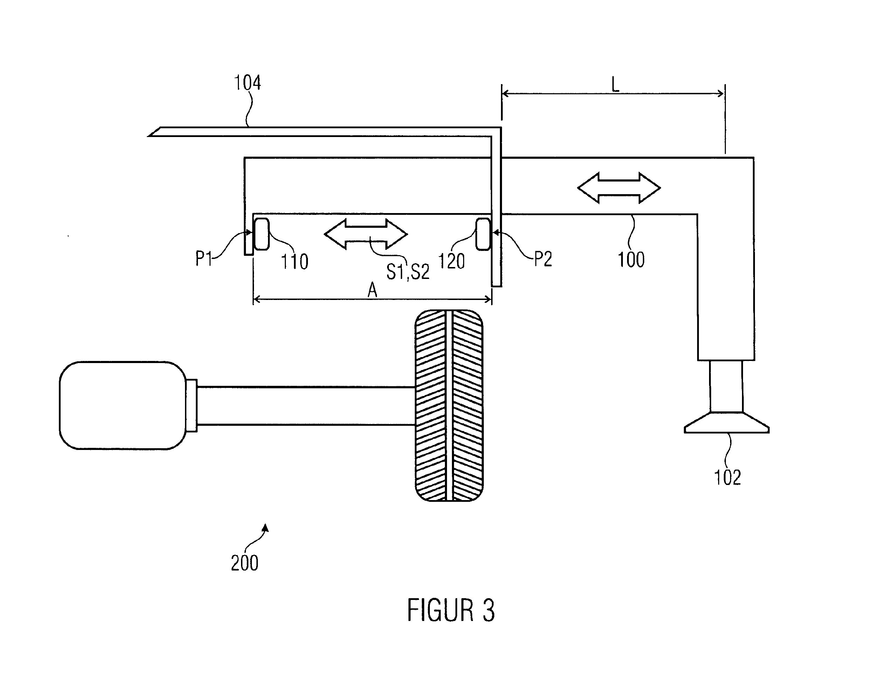

Die Fig. 3 zeigt eine mögliche Anordnung von einem Ausführungsbeispiel der vorliegenden Erfindung an dem mobilen Kran 200, um die Ausfahrlänge L von dem ausfahrbaren Maschinenteil 100 zu bestimmen. Die Bestimmung erfolgt dabei mittels eines ersten Referenzpunkts P 1 und eines zweiten Referenzpunkts P2, die akustisch koppelbar sind und den Abstand A aufweisen, der sich in Abhängigkeit der Ausfahrlänge L ändert. Die erfindungsgemäße Vorrichtung weist wie in der Fig. 1 beschrieben den ersten und einen zweiten Ultraschallwandler 110, 120 auf, die am ersten und zweiten Referenzpunkt P1, P2 anbringbar sind, wobei der erste Ultraschallwandler 110 ausgebildet ist, um ein erstes Ultraschallsignal S 1 zu senden und ein zweites Ultraschallsignal S2 zu empfangen und wobei der zweite Ultraschallwandler 120 ausgebildet ist, um das zweite Ultraschallsignal S2 zu senden und das erste Ultraschallsignal (S1) zu empfangen. Ferner weist die Vorrichtung die Auswerteeinheit 130 (in der Fig. 3 nicht gezeigt), die ausgebildet ist, um die erste Laufzeit T1 zwischen Senden und Empfangen des ersten Ultraschallsignals S1 und die zweite Laufzeit T2 zwischen Senden und Empfangen des zweiten Ultraschallsignals S2 zu messen, um daraus die Ausfahrlänge L zu bestimmen.

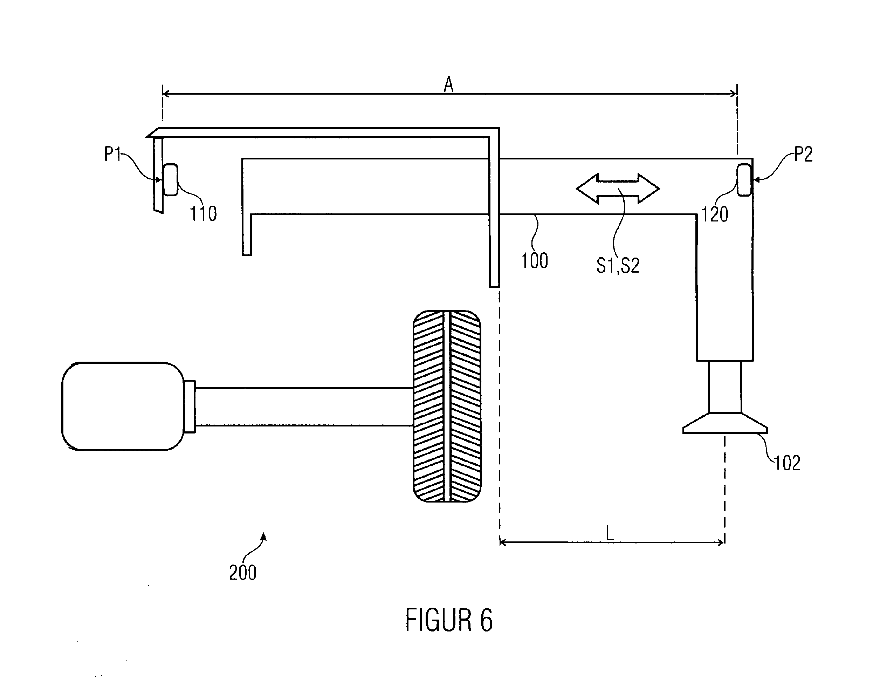

Bei dem hier gezeigten Ausführungsbeispiel wird die Ausfahrlänge L zwischen der seitlichen Begrenzung 104 des mobilen Krans 200 und dem Mittelpunkt des Stempels 102 gemessen. Alternativ kann die Ausfahrlänge L auch bis zum am weitest gelegenen Punkt des Stempels 102 messen (oder einem anderen Punkt). In jedem Fall besteht bei dem hier gezeigten Ausführungsbeispiel eine Abhängigkeit zwischen der Ausfahrlänge L und dem Abstand A, wobei die Ausfahrlänge L mit abnehmendem Abstand A zunimmt, in der Art, dass die Summe von Abstand A und Ausfahrlänge L beispielsweise konstant bleibt. Andere funktionale Zusammenhänge sind jedoch ebenfalls möglich (siehe Fig. 6).

Bei weiteren Ausführungsbeispielen kann der erste und zweite Ultraschallwandler 110 und 120 vertauscht werden, so dass der zweite Ultraschallwandler 120 zunächst das zweite Ultraschallsignal S2 aussendet und der erste Ultraschallwandler 110 daran anschließend das erste Ultraschallsignal S1 sendet. Die Positionierungen der Ultraschallsensoren an den Referenzpunkten P1, P2 können ebenfalls ausgetauscht sein.

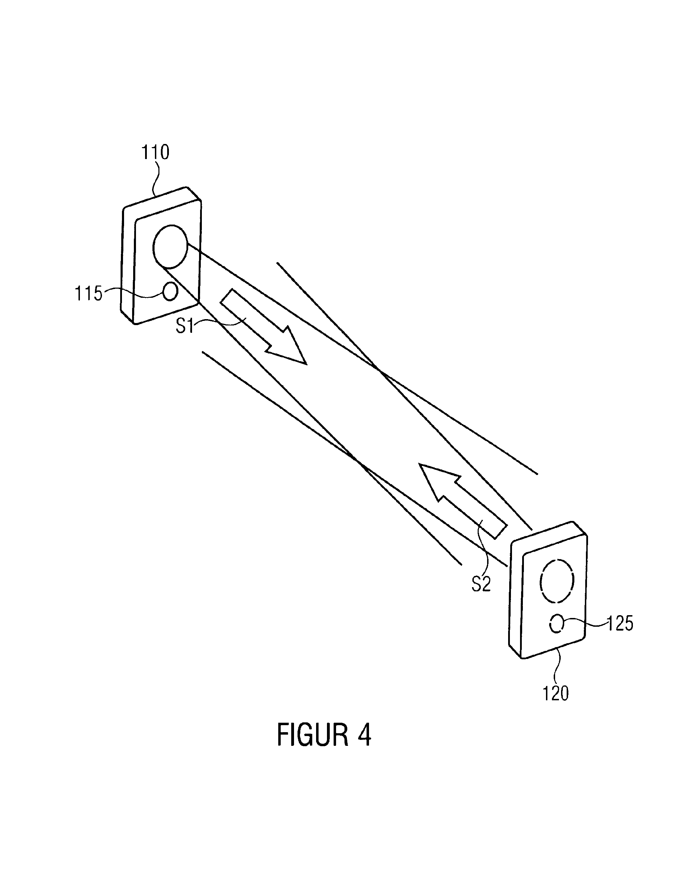

Die Fig. 4 zeigt ein weiteres Ausführungsbeispiel, bei dem der erste Ultraschallwandler 110 einen ersten Thermosensor 115 aufweist, und bei dem der zweite Ultraschallwandler 120 einen zweiten Thermosensor 125 aufweist. Der erste Thermosensor 115 ist dabei ausgebildet, um eine Temperatur des ersten Ultraschallwandlers 110 oder eine Temperatur einer Umgebung des ersten Ultraschallwandlers 110 zu messen und der zweite Thermosensor 125 ist ausgebildet, um eine Temperatur des zweiten Ultraschallwandlers oder eine Temperatur einer Umgebung des zweiten Ultraschallwandlers 120 zu messen. Mit Hilfe der gemessenen Temperaturen kann eine Korrektur vorgenommen werden, die den temperaturabhängigen Fehler bei der Abstandsmessung korrigiert.

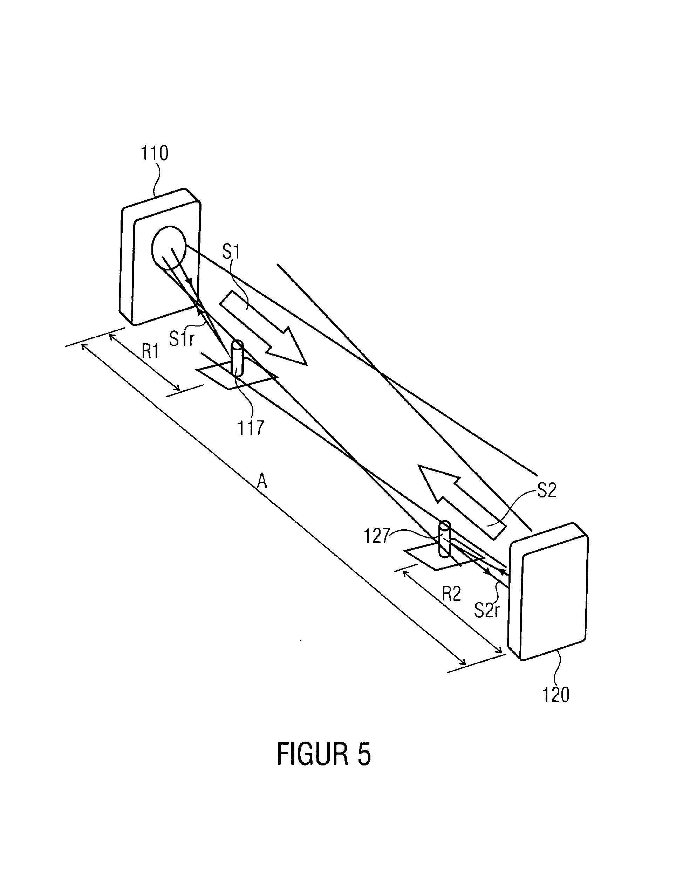

Fig. 5 zeigt ein weiteres Ausführungsbeispiel zur Korrektur eines temperaturabhängigen Fehlers. Dazu ist in einem ersten Referenzabstand R1 von dem ersten Ultraschallwandler 110 ein erster Reflektor 117 angeordnet. Ferner ist in einem zweiten Referenzabstand R2 von dem zweiten Ultraschallwandler 120 ein zweiter Reflektor 127 angeordnet. Die Reflektoren dienen dabei Referenzmessungen, um beispielsweise Messfehler in Folge thermischer Schwankungen auszugleichen. Dabei wird das erste Ultraschallsignal S1, welches von dem ersten Ultraschallwandler 110 in Richtung des zweiten Ultraschallwandlers 120 ausgesandt wird, von dem ersten Reflektor 117 reflektiert und an den ersten Ultraschallwandler 110 zurück gesendet. Der erste Ultraschallwandler 110 ist ausgebildet, um die Zeitdauer zwischen dem Aussenden des ersten Ultraschallsignals S 1 und dem Empfangen des reflektierten Signals S1r zu messen, um daraus eine Vergleichsmessung für den ersten Referenzabstand R1 durchzuführen.

Da der Referenzabstand R1 des ersten Reflektors 117 einen ersten Sollwert von dem ersten Ultraschallwandler 110 aufweist, kann aus dem gemessenen Abstand und dem Vergleichen mit dem Sollabstand bestimmt werden, wie weit thermische Schwankungen zu einer Verfälschung der Längenmessung mittels Zeitmessung zwischen Aussenden und Empfangen eines reflektierten Signals geführt haben.

In analoger Art weist der zweite Referenzabstand R2 des zweiten Reflektors 127 von dem zweiten Ultraschallwandler 120 einen zweiten Sollwert auf, wobei der zweite Reflektor 127 in Ausbreitungsrichtung des zweiten Ultraschallsignals S2 angeordnet ist. Wie zuvor beschrieben, kann somit auch für das zweite Ultraschallsignal S2 eine Referenzmessung durchgeführt werden, indem das zweite Ultraschallsignal S2 von dem zweiten Reflektor 127 reflektiert wird und ein zweites reflektiertes Signal S2r an den zweiten Ultraschallwandler 120 zurückgesandt wird. Dabei ist der zweite Ultraschallwandler 120 - ähnlich dem ersten Ultraschallwandler 110 - ausgebildet, um eine Zeitdauer zwischen dem Aussenden des zweiten Ultraschallsignals S2 und dem Empfangen des reflektierten zweiten Ultraschallsignals S2r zu messen, so dass der Referenzabstand R2 berechnet werden kann und mit dem bekannten zweiten Sollwert verglichen wird. Aus der Abweichung des zweiten Sollwerts von dem berechneten zweiten Referenzabstand R2 kann somit wiederum eine Abschätzung hinsichtlich der thermisch bedingten Fehlerrate vorgenommen werden.

Im Gegensatz zu dem Ausführungsbeispiel, welches in der Fig. 4 gezeigt ist, erlaubt das Ausführungsbeispiel in der Fig. 5 somit eine Temperaturmessung entlang der Strecke zwischen dem ersten Referenzpunkt P1 und dem zweiten Referenzpunkt P2. Es ist somit nicht nur die Temperatur an dem ersten Ultraschallwandler 110 und dem zweiten Ultraschallwandler 120 bekannt, sondern temperaturbedingte Fehlerraten können über den gesamten Abstand A berücksichtigt werden. Der erste Reflektor kann beispielsweise an dem ausfahrbaren Maschinenteil 100, wie er in der Fig. 3 gezeigt ist, angeordnet sein, wobei der zweite Reflektor 127 mit dem Rahmen des Krans 200 in einem vorbestimmten Abstand zu dem zweiten Referenzpunkt P2 angeordnet ist.

Um mögliche Interferenzen zwischen den verschiedenen Reflexionen zu minimieren, kann der erste Reflektor 117 derart ausgebildet sein, dass er bevorzugt das Ultraschallsignal S 1 von dem ersten Ultraschallwandler 110 reflektiert und der zweite Reflektor 127 kann ausgebildet sein, um vorzugsweise das zweite Ultraschallsignal S2 von dem zweiten Ultraschallwandler zu reflektieren. Alternativ kann für die Referenzmessungen auch ein zeitliches Fenster erlaubt werden, so dass mögliche Reflexionen des ersten Ultraschallsignals S 1 an dem zweiten Reflektor 127 außerhalb eines zu messenden Referenzfensters liegen. Ein Reflexionssignal S1r ist beispielsweise lediglich dann gültig, wenn es in einem zeitlichen Fenster t₁+t₀±Δt liegt (wobei Δt die Breite des Fensters angibt und t₀ aus dem Sollwert ermittelt wird).

Alternativ ist es ferner möglich, den ersten Reflektor 117 derart anzuordnen, dass er zwar akustisch mit dem ersten Ultraschallwandler 110 gekoppelt ist, nicht jedoch akustisch mit dem zweiten Ultraschallwandler 120 gekoppelt ist. In analoger Weise kann der zweite Reflektor 127 derart an der Maschine angeordnet sein, dass er zwar mit dem zweiten Ultraschallwandler 120 akustisch gekoppelt ist, jedoch keine akustische Kopplung zu dem ersten Ultraschallwandler 110 aufweist.

Die Fig. 6 zeigt eine mögliche alternative Anordnung (im Vgl. zu Fig. 3) für den ersten und zweiten Ultraschallwandler 110, 120 an dem mobilen Kran 200. Bei dem gezeigten weiteren Ausführungsbeispiel wird die Ausfahrlänge L von dem ausfahrbaren Maschinenteil 100 dadurch bestimmt, dass der erste Referenzpunkt P1 fest mit dem Kran 200 verbunden ist, währenddessen der zweite Referenzpunkt P2 bei diesem Ausführungsbeispiel fest mit dem ausfahrbaren Maschinenteil 100 verbunden ist. Der erste Referenzpunkt P1 und der zweite Referenzpunkts P2, die wiederum akustisch gekoppelt sind, sind im Abstand A voneinander entfernt, wobei jetzt die Ausfahrlänge L mit zunehmendem Abstand A ebenfalls zunimmt.

Der erste Ultraschallwandler 110 sendet wiederum das erste Ultraschallsignal S 1 aus und empfängt das zweite Ultraschallsignal S2, und der zweite Ultraschallwandler 120 sendet das zweite Ultraschallsignal S2 aus und empfängt das erste Ultraschallsignal S 1. Dazu kann der zweite Referenzpunkt P2 innerhalb des ausfahrbaren Maschinenteils 100 angeordnet sein, so dass sich das erste und zweite Ultraschallsignal S1, S2 innerhalb des Maschinenteils 100 ausbreiten können. Das ausfahrbare Maschinenteil 100 sollte dazu eine Öffnung am hinteren Ende (d.h. dem zweiten Referenzpunkt P2 gegenüberliegenden Ende) aufweisen.

Ausführungsbeispiele können somit wie folgt zusammengefasst werden. Sie umfassen eine Vorrichtung zur Längenmessung, die sich insbesondere auch für Teleskopzylinder, Stützen oder Stempel eignet, und die aus mindestens zwei Ultraschallwandlern 110, 120 besteht und eine dazugehörige Elektronik zum Senden und Empfangen von Ultraschallsignalen S1, S2 zur Laufzeitmessung aufweist. In einer ersten Messung sendet ein Sensor 110 das Signal S 1 aus und der gegenüberliegende Sensor 120 empfängt das Signal S1, während in einer zweiten Messung der gleiche Abstand A von der anderen Seite gemessen wird, wobei der Sender 110 zum Empfänger und der Empfänger zum Sender wird. Somit senden und empfangen wechselseitig beide Ultraschallwandler.

Ferner stehen sich bei Ausführungsbeispielen die Sensoren gegenüber, wobei ein Sensor an einem festen Teil und der andere Sensor an einem beweglichen Teil befestigt sind. Bei weiteren Ausführungsbeispielen wird, wie oben bereits beschrieben, ein Ultraschallsignal S 1 von einem Sender 110 ausgesendet, und dieses wird von dem zweiten Sender 120 aufgenommen und zurück reflektiert. Über die Ultraschallsignale S1, S2 können sowohl Synchronisationen vorgenommen werden, als auch Abstandsinformationen übertragen werden, so dass eine Verkabelung des beweglichen Teils vereinfacht wird oder auch ganz entfallen kann.

Bei weiteren Ausführungsbeispielen weist jeder Sensor 110, 120 einen Temperatursensor 115, 125 zur Kompensation der Lufttemperatur auf. Alternativ dazu kann jeder Sensor 110, 120 zusätzlich zu dem Ultraschallsignal S1, S2 des gegenüberliegenden Schwingers (Ultraschallwandler) aus seinem eigenen Echo, das von einem in einem festen Abstand R1, R2 angebrachten Referenzfläche zurück geworfen wird, eine Temperaturinformation ableiten und das Hauptabstandssignal entsprechend kompensieren. Es werden somit mindestens zwei Abstandsmesswerte generiert, die auf ihre Plausibilität hin überprüft werden können. Sie sollten also nicht zu weit voneinander abweichen. Damit ist ein sicherer Betrieb unter allen Bedingungen gewährleistet.

Bei weiteren Ausführungsbeispielen sind die Sensoren 110, 120 derart angeordnet, dass sich der Abstand A zwischen dem ersten und zweiten Referenzpunkt P 1 und P2 vergrößert, je weiter der Stempel oder das ausfahrbare Maschinenteil 100 eingefahren ist und somit die Ausfahrlänge L sich verkleinert.

Bei einem weiteren Ausführungsbeispiel werden die zwei unterschiedlichen Messungen dazu benutzt, um systematische Einflüsse, die die Ausbreitungsgeschwindigkeit der Ultraschallsignale beeinflussen, festzustellen. Wenn beispielsweise die Ultraschallsignale sich in einer Richtung schneller ausbreiten als in der entgegengesetzten Richtung, dann werden die zwei unabhängigen Messungen zu systematisch unterschiedlichen Resultate führen. Beispielsweise können die Ultraschallsignale durch eine Bewegung des Ausbreitungsmediums systematisch beschleunigt oder abgebremst werden. Beispiele hierfür sind z.B. das Vorhandensein eines Windes, der dazu führt, dass das Ultraschallsignal sich bei Gegenwind langsamer ausbreitet als beispielsweise bei Rückenwind. Sofern der Wind nicht genau seitlich bläst, wird ein Wind immer zu systematischen Abweichungen führen. Andere negative Einflüsse, die die Ausbreitungsgeschwindigkeit systematisch verfälschen können, sind aber auch seitlich einfallender Regen oder Schnee oder auch Strömungen in einem flüssigen Medium, sofern die Abstandsmessungen in einer Flüssigkeit durchgeführt werden sollten.

Aus der systematischen Abweichung der beiden Signale ließe sich zunächst der Einfluss (z.B. die Windgeschwindigkeit oder die Windkomponente entlang der Ausbreitungsrichtung der Ultraschallsignale) feststellen und dann auch eliminieren. Um eine derartige Messung zuverlässig durchzuführen, könnte optional beispielsweise am Beginn oder auch in regelmäßigen Abständen eine Plausibilitätsuntersuchung durchgeführt werden. Die Plausibilitätsuntersuchung könnte beispielsweise wie folgt ablaufen. Zunächst wird ein Testsignal beispielsweise von dem ersten Ultraschallwandler 110 ausgesandt und der zweite Ultraschallwandler 120 empfängt das Testsignal. Danach wird in einem bestimmten Zeitabschnitt ein zweites Testsignal von dem ersten Ultraschallwandler 110 ausgesandt, welches wiederum von dem zweiten Ultraschallwandler 120 empfangen wird. Da die bestimmte Zeit fest vorgegeben sein kann (z.B. im Abstand von einer Sekunde oder zwei Sekunden oder fünf Sekunden durchgeführt wird), kann der zweite Ultraschallwandler aus dem Abstand der beiden empfangenen Signale nach Abzug der bestimmten Zeit feststellen, ob beide Messungen zueinander plausibel waren. Die Plausibilität würde beispielsweise vorliegen, wenn die beiden durch den zweiten Ultraschallwandler 120 empfangenen Signale ebenfalls mit einer gleichen zeitlichen Verzögerung ankommen, wie sie von dem ersten Ultraschallwandler ausgesandt worden sind bzw. die zeitliche Verzögerung innerhalb einer Toleranzbreite liegt. Die Schlussfolgerung aus einer derartigen Plausibilitätsuntersuchung wäre, dass sowohl der Sender als auch der Timer ordnungsgemäß funktionieren.

In gleicher Weise könnte auch eine Plausibilitätsuntersuchung in der anderen Richtung durchgeführt werden, bei der der zweite Ultraschallwandler 120 zunächst ein erstes Testsignal und nach einer weiteren bestimmten Zeitdauer ein zweites Testsignal aussendet und der erste Ultraschallwandler ausgebildet ist, beide Testsignale zu empfangen und gleichzeitig die Zeitdifferenz zwischen den beiden Testsignalen festzustellen. Aus dieser zweiten Plausibilitätsuntersuchung könnte dann geschlussfolgert werden, sofern der Abstand der beiden empfangenen Testsignale durch den ersten Ultraschallwandler 110 sich von der weiteren bestimmten Zeitdauer nur um eine Toleranzbreite unterscheidet, dass der Sender in dem zweiten Ultraschallwandler 120 ordnungsgemäß funktioniert und ebenfalls der Timer in dem ersten Ultraschallwandler 110 keine Fehler aufweist. Ein Kriterium könnte beispielsweise sein, dass die bestimmte Zeitdauer und die zweite Differenz zwischen den beiden empfangenen Signalen sich lediglich um ein Prozent oder nicht mehr als fünf Prozent voneinander unterscheiden.

Nachdem die negativen Einflüsse (wie z.B. die Windeinflüsse) festgestellt wurden, können sie ebenfalls in einfacher Art und Weise eliminiert oder kompensiert werden. Beispielsweise würde eine Mittelung bei der Zeitmessung oder Entfernungsmessung dazu führen, dass der beschleunigende Effekt in der einen Richtung durch den bremsenden Effekt in der anderen Richtung kompensiert werden würde. Bei weiteren Ausführungsbeispielen wäre es ebenfalls möglich, beide Messungen gleichzeitig durchzuführen, so dass sich stark ändernde Wettereinflüsse sehr effizient kompensieren lassen.

Vorteile von Ausführungsbeispielen basieren vor allem auf die beiden unabhängigen Messungen, wie beispielsweise das Feststellen von systematischen Einflüssen, die die Ausbreitungsgeschwindigkeit der Ultraschallsignale beeinflussen und somit zu falschen Resultaten führen.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Verfahren zur Synchronisation von Ultraschallwandlern (110, 120), die für eine Bestimmung einer Ausfahrlänge (L) eines ausfahrbaren Maschinenteils (100) ein erstes Ultraschallsignal (S1) von einem ersten Ultraschallwandler (110) an einen zweiten Ultraschallwandler (120) senden, ein zweites Ultraschallsignal (S2) von dem zweiten Ultraschallwandler (120) an den ersten Ultraschallwandler (110) senden, und basierend auf den empfangenen Ultraschallsignalen (S1, S2) die Ausfahrlänge bestimmen, mit folgendem Schritt:
Synchronisieren der Ultraschallwandler (110, 120) basierend auf einem zwischen diesen übertragenen Ultraschallsignal (P₁, P₂).

2. Verfahren nach Anspruch 1, bei dem das erste Ultraschallsignal und das zweite Ultraschallsignal zur Bestimmung der Ausfahrlänge (L) jeweils einen Ultraschallpuls umfassen, und bei dem das Synchronisation folgende Schritte umfasst:
Senden eines Ultraschallsignals, das den Ultraschallpuls (P₁) und einen weiteren Ultraschallpuls (P₂) umfasst, durch den ersten Ultraschallwandler (110);
Empfangen der zwei gesendeten Ultraschallpulse (P₁, P₂) durch den zweiten Ultraschallwandler (120); und
an dem zweiten Ultraschallwandler (120), basierend auf dem zeitlichen Abstand t₁, mit dem die Ultraschallpulse (P₁, P₂) empfangen werden, Bestimmen einer Referenzzeit des ersten Ultraschallwandlers (110).

3. Verfahren nach Anspruch 2, mit folgendem Schritt:
Einstellen eines Zeitgebers des zweiten Ultraschallwandlers (120) basierend auf der bestimmten Referenzzeit.

4. Verfahren nach Anspruch 2 oder 3, mit folgendem Schritt:
Überprüfen der Plausibilität der Übertragung basierend auf den reflektierten Ultraschallpulsen.

5. Verfahren nach Anspruch 1, bei dem das erste Ultraschallsignal und das zweite Ultraschallsignal zur Bestimmung der Ausfahrlänge (L) jeweils einen Ultraschallpuls umfassen, und bei dem das Synchronisieren folgende Schritte umfasst:
Senden eines ersten Ultraschallpulses (P₁) durch den ersten Ultraschallwandler (110);
Empfangen des ersten Ultraschallpulses (P₁) durch den zweiten Ultraschallwandler (120);
Zurücksenden eines zweiten Ultraschallpulses (P₂) an den ersten Ultraschallwandler (110) durch den zweiten Ultraschallwandler (120) nach einer vorbestimmten Verzögerungszeit (t₁);
Empfangen des zweiten Ultraschallpulses (P₂) an dem ersten Ultraschallwandler (110); und
basierend auf einem bekannten Abstand (A) zwischen dem ersten Ultraschallwandler (110) und dem zweiten Ultraschallwandler (120) und basierend auf dem Zeitpunkt des Empfangens des zweiten Ultraschallpulses (P₁), Bestimmen einer Referenzzeit des zweiten Ultraschallwandlers (120).

6. Verfahren nach Anspruch 5, mit folgendem Schritt:
Einstellen eines Zeitgebers des ersten Ultraschallwandlers (110) basierend auf der bestimmten Referenzzeit.

7. Verfahren nach einem der Ansprüche 1 bis 6, bei dem der erste und der zweite Ultraschallwandler (110, 120) einen Temperatursensor umfassen, wobei basierend auf einem Temperaturgefälle zwischen den Ultraschallwandlern (110, 120) eine Temperaturkompensation oder eine Windeinflusskompensation der Ausfahrlänge (L) erfolgt.

8. Verfahren nach einem der Ansprüche 1 bis 7, bei dem das Bestimmen der Ausfahrlänge folgende Schritte umfasst:
Senden eines ersten Ultraschallsignals (S1) von einem ersten Ultraschallwandler (110) an dem ersten Referenzpunkt (P1) und Empfangen des ersten Ultraschallsignals (S1) durch einen zweiten Ultraschallwandler (120) an dem zweiten Referenzpunkt (P2) nach einer ersten Laufzeit (T1);
Senden eines zweiten Ultraschallsignals (S2) von dem zweiten Ultraschallwandler (120) und Empfangen des zweiten Ultraschallsignals (S2) durch den ersten Ultraschallwandler (120) nach einer zweiten Laufzeit (T2);
Ermitteln der ersten und zweiten Laufzeit (T1, T2) zwischen Senden und Empfangen des ersten und des zweiten Ultraschallsignals (S1, S2); und
Berechnen eines ersten Wertes für den Abstandes (A) oder der Ausfahrlänge (L) aus der ersten Laufzeit (T1) und Berechnen eines zweiten Wertes für den Abstandes (A) oder der Ausfahrlänge (L) aus der zweiten Laufzeit (T2).

9. Verfahren nach einem der Ansprüche 1 bis 8, bei dem die Ausfahrlänge (L) des ausfahrbaren Maschinenteils (100) bestimmt wird, falls das ausfahrbare Maschinenteil stillsteht.

10. Vorrichtung zur Bestimmung einer Ausfahrlänge (L) eines ausfahrbaren Maschinenteils (100) mit einem ersten Referenzpunkt (P1) und einem zweiten Referenzpunkt (P2), die akustisch koppelbar sind und einen Abstand (A) aufweisen, der sich in Abhängigkeit von der Ausfahrlänge (L) ändert, mit folgenden Merkmalen:
einem ersten und einen zweiten Ultraschallwandler (110, 120), die am ersten und zweiten Referenzpunkt (P1, P2) anbringbar sind, wobei der erste Ultraschallwandler (110) ausgebildet ist, um ein erstes Ultraschallsignal (S1) zu senden und ein zweites Ultraschallsignal (S2) zu empfangen und wobei der zweite Ultraschallwandler (120) ausgebildet ist, um das zweite Ultraschallsignal (S2) zu senden und das erste Ultraschallsignal (S 1) zu empfangen,
wobei die Ultraschallwandler (110, 120) konfiguriert sind, um sich gemäß einem der Ansprüche 1 bis 9 zu synchronisieren.
